# EUROPEAN PATENT SPECIFICATION

(11) **EP 3 078 774 B1**
(45) Date of publication and mention of the grant of the patent: **25.10.2023**
(21) Application number: 16164341.6
(22) Date of filing: 07.04.2016
(51) Int. Cl.: E01D 22/00

(54) **MOBILE ROBOT STATION AND REPAIR METHOD**
MOBILER ROBOTER UND REPARATURMETHODE
ROBOT MOBILE ET PROCEDE DE REPARATION

(30) Priority: 07.04.2015 NL 2014590
(43) Date of publication of application: 12.10.2016
(60) Divisional application: 23196881.9
(73) Proprietor: VolkerWessels Intellectuele Eigendom B.V., 7461 BA Rijssen (NL)
(72) Inventor: Van Buuren, Henrie, 4131 NJ Vianen (NL)
(74) Representative: Nederlandsch Octrooibureau

(56) References cited:
- WO-A1-2006/054041
- CA-A1- 2 584 300

## Description

The present invention relates to:
a method for the repair of an orthotropic steel highway bridge deck.

### 1. Repair of an orthotropic steel bridge decksteel highway bridge deck.

Particularly due to heavy freight traffic, a steel bridge deck (also called: bridge roadway), in particular an orthotropic steel bridge roadway, is increasingly prone to fatigue cracking. By removing the asphalt pavement of asphalt concrete, which is normally present on top of the bridge roadway, from the bridge deck, the steel surface is exposed in order to be inspected and, if necessary, to be repaired.

Document WO 2006/054041 A1 discloses a method of repairing, reinforcing or reinstating a bridge, comprising fixing a reinforcing plate in a spaced relationship with an existing plate or girder, especially on the underside of the bridge structure, to form a closed cavity, and injecting plastics or polymer material into said cavity in liquid form, whereby said plastics or polymer material sets or cures so as to bond to said reinforcing and existing plates with sufficient strength to transfer shear forces therebetween.

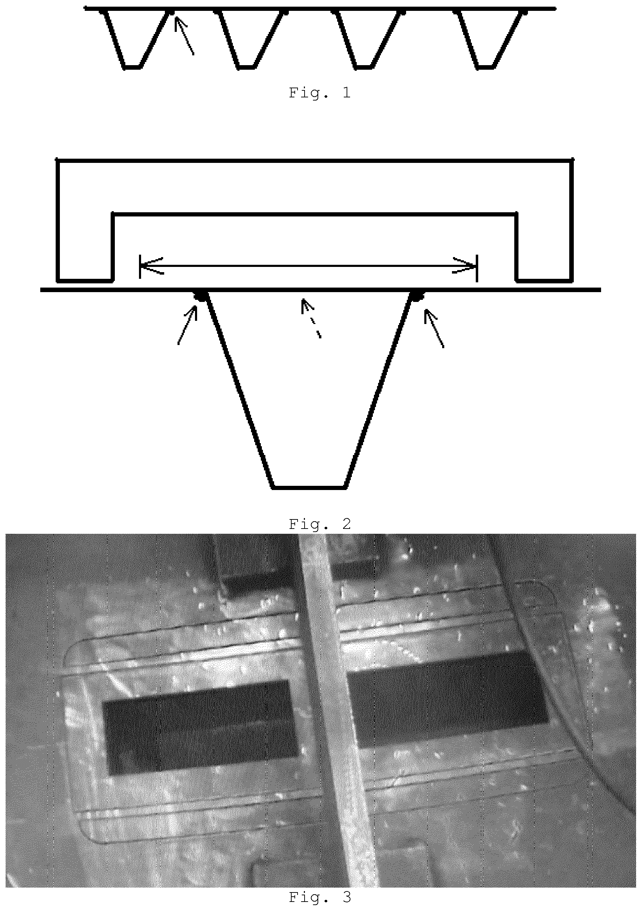

Fig. 1 shows a schematic cross-sectional view of the bridge deck, a horizontal steel plate with V-shaped or trough-shaped stiffener (stiffening trough)profiles welded to the bottom at the bottom thereof, the arrow indicates the location of the weld bead.

Fig. 2 is a view to clarify details such as the location of the weld bead (see arrows) between the bridge deck and stiffening trough. In a cracked bridge deck (the dotted arrow indicates the typical crack location), the bridge deck must be replaced over the area indicated by the horizontal arrow (for a length transverse to the drawing paper of approximately 1 meter) with a slightly thicker steel plate (thus an area on either side, well outside the place of attachment between the bridge deck and stiffening trough). During replacement, the stiffening trough must remain in place and be welded to the thicker steel plate in the original manner. During the repair, a temporary bridge structure welded above the bridge deck (so-called "Kram" [English: staple]; a 8 cm thick solid steel plate) retains the shape of the repair area. This staple is also roughly shaped like an upside-down U.

According to the known procedure, a worker located below the bridge deck removes the weld bead between the deck and the stiffening trough.

The invention avoids the removal of the weld bead by a worker underneath the bridge deck, thereby saving time and money and moreover allowing the work to be mechanized. To this end, a start is made by cutting open an inspection hole, as shown in Fig. 3. The inspection hole is well within the weld beads, of the stiffening trough.

Via the inspection hole, from the top of the bridge deck, the position of the stiffening trough can be precisely measured (for example by insertion of a probe through the inspection hole), and on the basis of this measurement, the original bridge deck is cut away to the prescribed size, wherein two strips of the bridge deck are left, which precisely overlap with the upright walls of the stiffening trough. The photo above shows the middle, wide, slab with the inspection hole and a narrow slab on both sides of it, which are still in place in the bridge deck and cut loose, and between a narrow and the middle wide slab in each case the still on the stiffening trough and the rest of the bridge deck fixed strip.

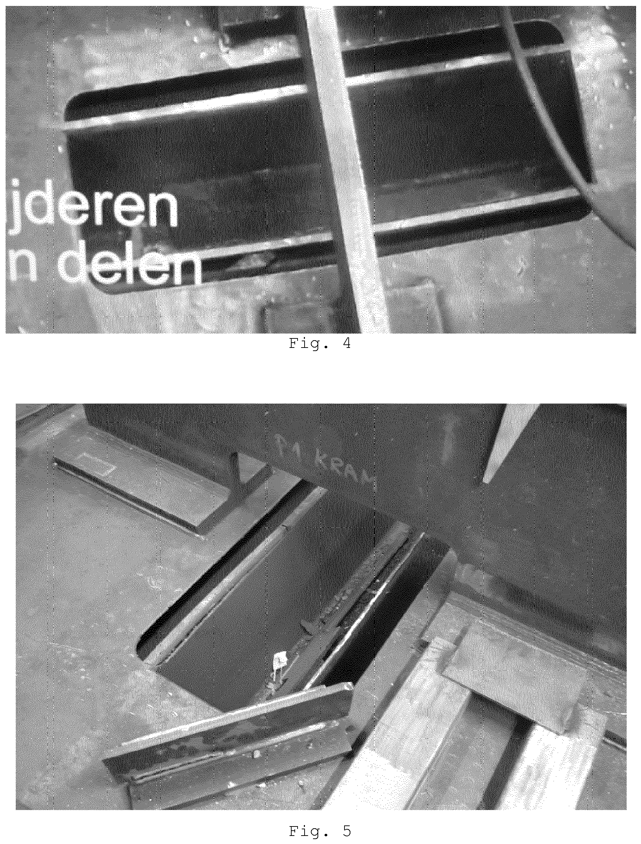

The photograph of FIG. 4 shows the bridge deck cut open to the prescribed size, except for two strips that coincide with the position where the upright walls of the stiffening trough connect to the bridge deck. The middle wide slab and the two narrow slabs on either side have now been removed to allow a view down into and along the stiffening trough.

Now these two strips are also cut-loose (see Fig. 5), as a result of which the upper edges of the upright trough walls are slightly lowered so that the thicker repair plate with its top surface is flush with the top surface of the rest of the bridge deck.

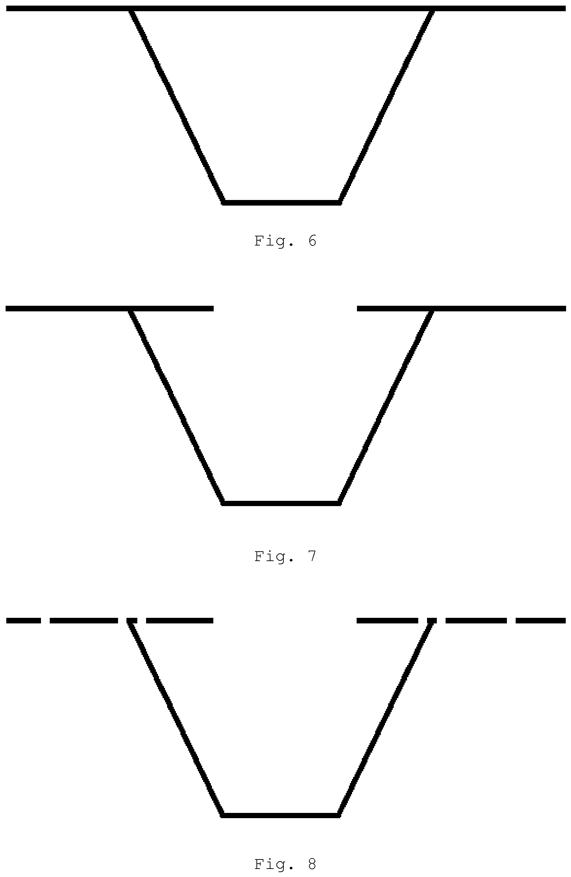

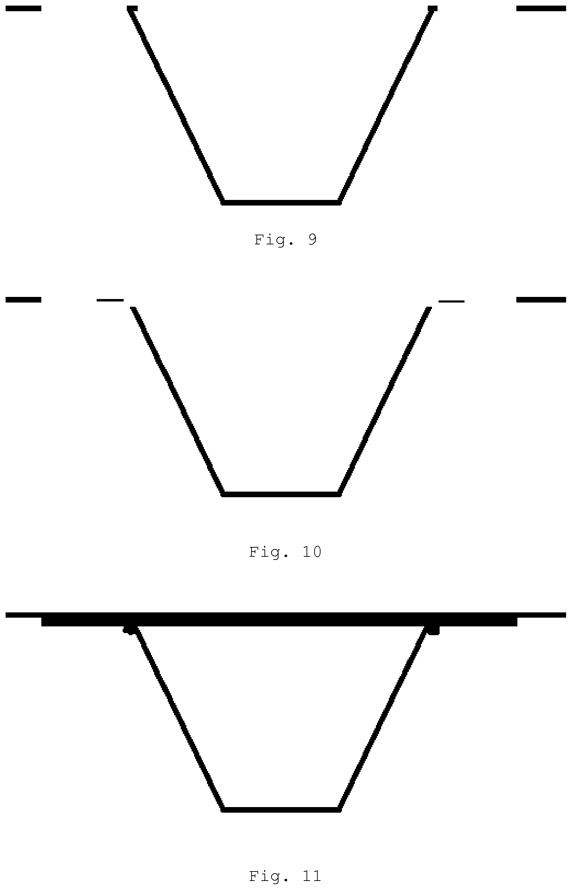

The repair procedure is summarized as follows by way of sketched cross-sections of a piece of bridge deck with an associated stiffening trough underneath.
step 1 (Fig. 6): start of the repair.
step 2 (fig. 7): making of an inspection hole
step 3 (Fig. 8): cutting loose the middle wide slab and a narrow slab on each side, in between are the on the stiffening trough welded strips
step 4 (Fig. 9): removal of the dissected middle wide and the narrow slabs on both sides
step 5 (fig. 10): cutting loose and removing the strips so that the upper edge of the stiffening trough is below its original level (indicated by the thin line).
step 6 (Fig. 11): placing the (thicker) repair plate and re-welding (from below the bridge by a welder) of the stiffening trough. The repair plate is welded to the surrounding bridge deck by the industrial robot located above the bridge deck.

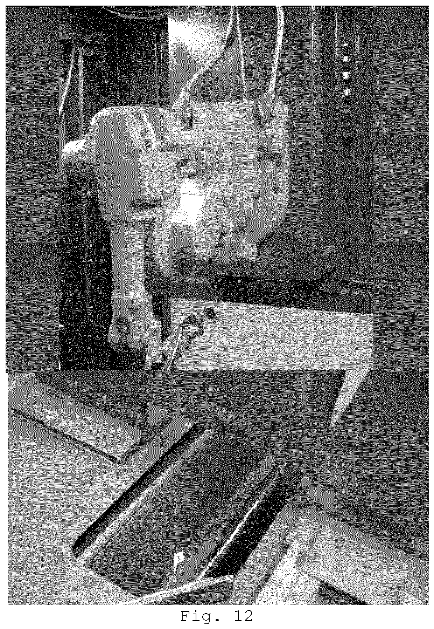

Fig. 12 shows an Industrial 6-axis robot arm fixedly mounted to a movable structure standing free and stable on top of the bridge deck. The robot arm is suspended over the top surface of the bridge deck and has cut loose the inspection hole and then the middle wide slab and the two narrow slabs on both sides, and then the strips with the weld bead to the stiffening trough so that the stiffener through is cut loose by the robot. The temporary staple welded to the top of the bridge deck is partially visible, in particular one of the feet with which the staple is attached to the bridge deck.

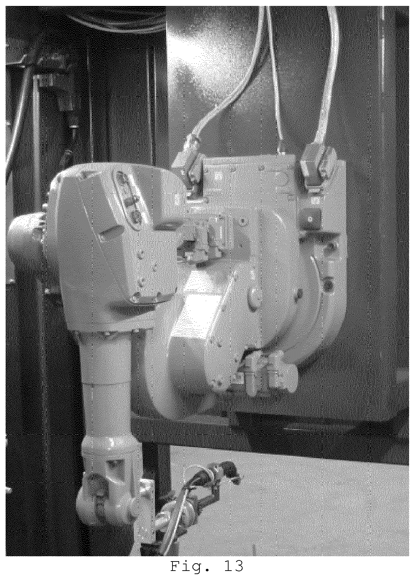

Fig. 13 shows in detail the six-axis robot arm with horizontal pivot axis of the shoulder joint (Axis 1), mounted on a movable structure, for example inside a shipping container or at the back of a truck or forklift.

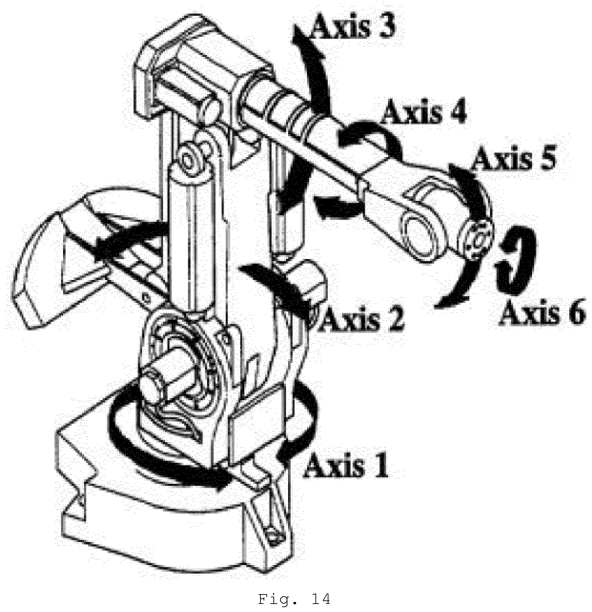

Fig. 14 shows the designation of the axes of a 6-axis robot arm, in this picture the pivot axis of the shoulder joint (Axis 1) is oriented vertically, this is the usual orientation of this type of robot arm.

### 2. Mobile work station with industrial robot arm.

A lot of manual work is performed on an existing building. This is expensive, requires a lot of manpower, is slow and inaccurate and the quality varies.

Preferably, one or more of the following applies: the robot arm is mounted "overhead" (preferably permanently) on a support frame; the support frame is arranged to be moved and to be placed in a stable and temporary position at the place where the robot arm is to perform its work; the support frame is constructed so that during the time it is stored and / or is in operation, the robot arm remains within the area delimited by the support frame, wherein preferably, the support frame is configured to form a barrier to human access to the working area of the robot, for example, in that the support frame comprises a (preferably substantially completely enclosing) shell structure (for example, access preventing side walls and optionally a roof), which barrier may be equipped with a (e.g. with a door) closable access opening; the shell structure is self-supporting (monocoque); the robot is mounted in a fixed location on the support frame; the support frame has dimensionally stable support edges, preferably fixed to the support frame, and which are positioned so that they provide a stable three- or more-point support; the support frame has retractable wheels; the support frame forms a tent or canopy; the support frame carries the peripheral equipment for the robot, such as the control unit, data logger, energy source, power generator, batteries, compressed air generator, fuel tank, tools, power supply for the tools, such as a gas tank; the mobile work station is an independent and / or completely self-sufficient unit; the work station includes wall units that delimit a spatial area within which the robot operates; a measure disclosed in the following, irrespective of the measures in combination with which this measure has been presented:

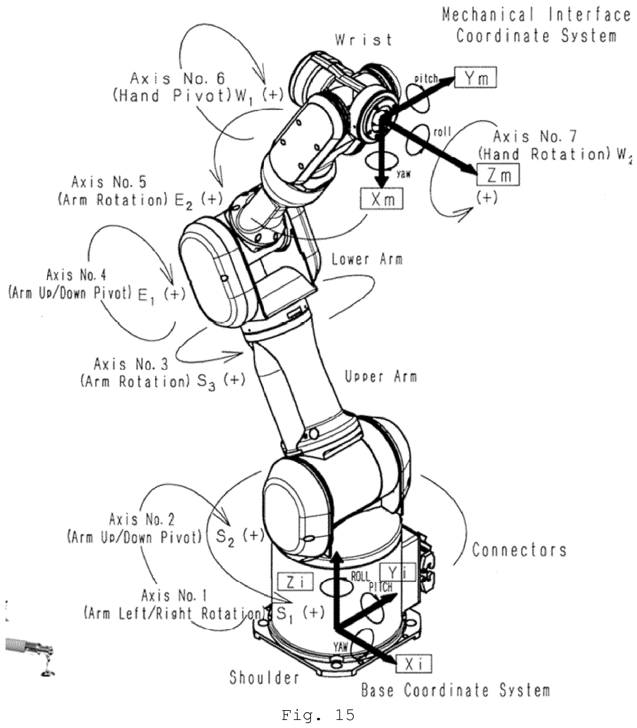

Fig. 15 shows a 7-axis robot arm, axis No. 3 is missing on a 6-axis robot arm.

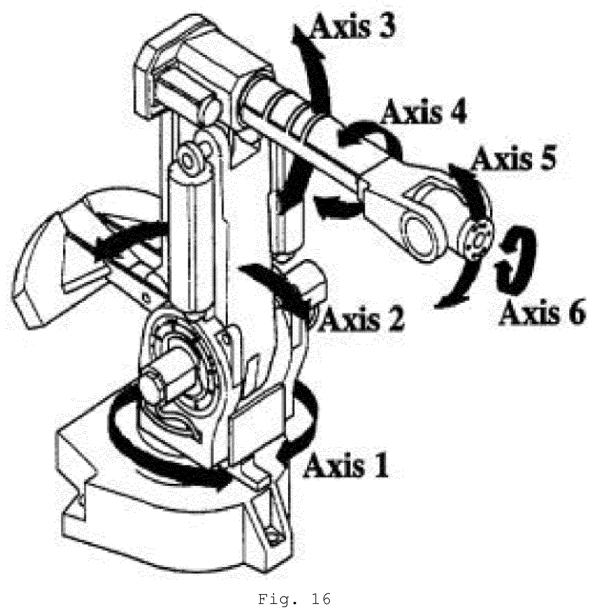

Fig. 16 shows a 6-axis robot arm, compared to the 7-axis robot arm, the upper arm cannot rotate about its own longitudinal axis. The axis of the shoulder joint (Axis 1) is vertical when the base is set at the bridge deck, as shown, and horizontal when the base, tilted 90 degrees with respect to this view, is overhead ( "vertically overhead") mounted, and vertical again when the base, tilted 180 degrees with respect to this view, is overhead ( "horizontal overhead") mounted.

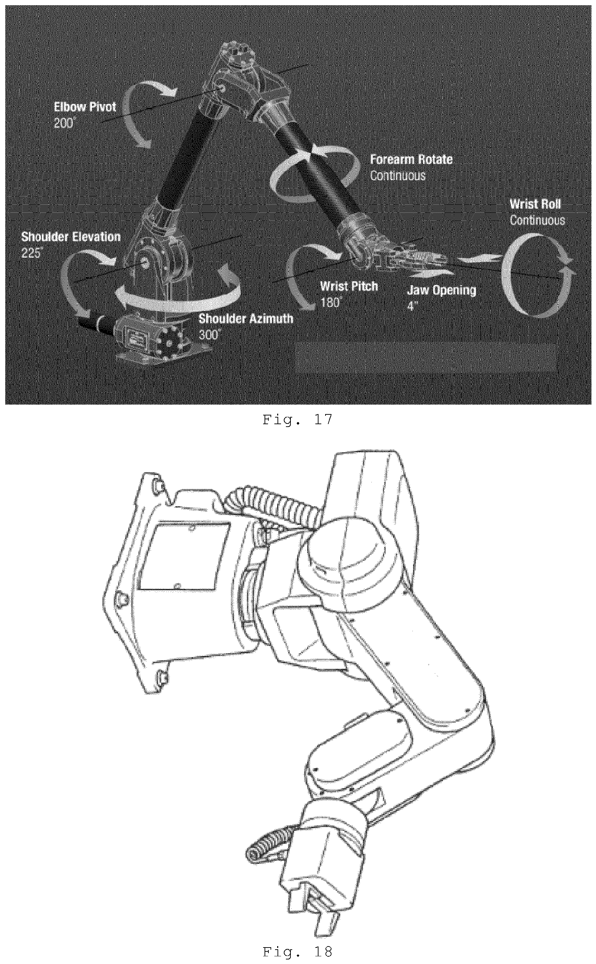

Fig. 17 shows the maximum swing angles in a 6-axis robot arm.

Fig. 18 shows a 6-axis robot arm, overhead ( "vertically overhead") mounted, its free end can cover a large contiguous portion of the surface of the bridge deck. The base is fixedly mounted to an upright or vertical support, the support is directly or indirectly loose on the bridge deck. The axis of the shoulder joint is horizontal.

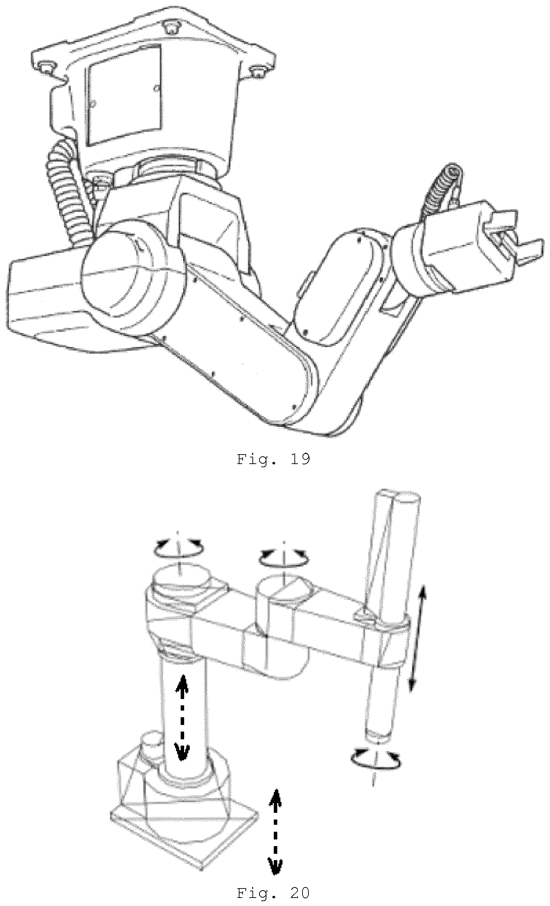

Fig. 19 shows the same 6-axis robot arm, overhead ( "horizontal overhead") mounted, which can cover a large surface area of the bridge deck located below the robot arm.

Fig. 20 shows a 3-axis robot arm with 3 parallel axes and between the forearm and the hand a linear (e.g. vertically) movable intermediate piece to adjust the level of the hand (at the lower end of the intermediate piece). Forearm and upper arm move with vertical axes parallel to the bridge deck, so that the tool at the free lower end of the robot arm (at the free lower end of the intermediate piece) can cover a large surface area of the bridge deck. In addition or alternatively to the vertically movable intermediate piece, the level of the base or the location of the upper arm along the adjoining vertical column (the "trunk") connecting to the base can be adjusted as is indicated by dotted arrows.

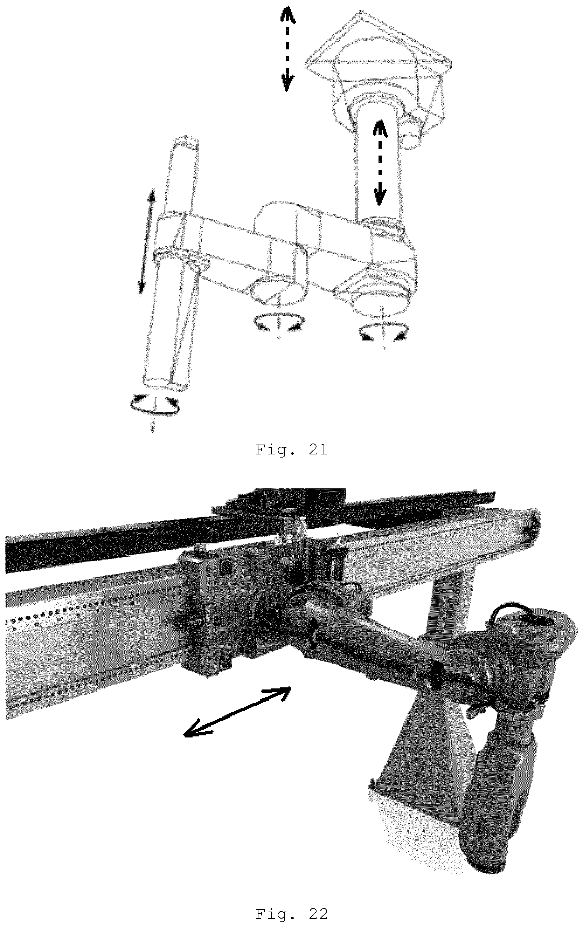

Fig. 21 shows the same 3-axis robot arm of Fig. 20, now overhead ( "horizontal overhead") mounted, with its base suspended under a horizontal or vertical support.

Fig. 22 shows a 5-axis overhead ( "vertically overhead") mounted robotic arm, sliding along the portal as the arrow indicates, portal being located horizontally above the bridge deck, a support leg resting freely on the bridge deck (one of which is visible) is mounted at each end of the portal and supports the portal. Assembly of two support legs and portal, which carries a robot arm, can be moved over the bridge deck with wheels at lower end of support legs (not visible). Or this assembly can be lifted by a hoisting instalation, such as a forklift, to be moved across the bridge deck, for which purpose the assembly can be equipped at a high and / or low or other suitable level with recesses for the forks of a forklift truck or with other hoisting facilitating means such as pad eyes. Compared to a 6-axis robot arm, the axis of the shoulder joint (Axis 1) is rigid.

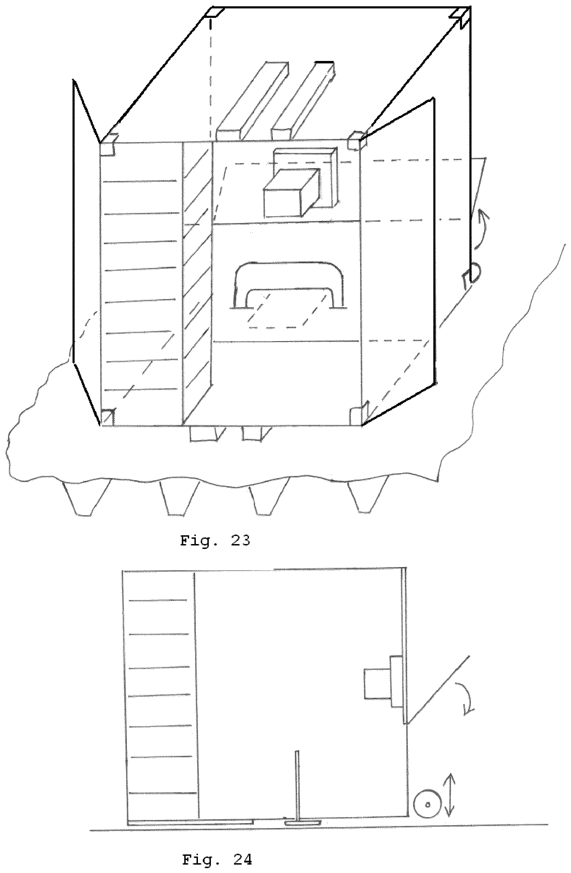

Fig. 23-24 show a perspective and sectional side view of a shipping container (one example of a self-supporting shell structure) with corner castings, in which an industrial 6-axis robot arm is mounted overhead. A part of the bottom of the container has been removed. The top wall and the two side walls have been left intact, the back wall has been modified. The container is placed directly on the bridge deck, over the staple. The robot welds the staple to the bridge deck and then cuts a hole in the bridge deck. The lower part of the fixed back wall, to which the robot arm is mounted, is mounted pivotally around a horizontal hinge and shown in the open position so that the shipping container can be driven over the staple. The shipping container has retractable wheels on one end (the fixed wall that supports the robot arm) and by lifting the other (opposite) end (equipped with doors as shown) the shipping container can drive on the bridge deck. The shipping container contains a cabinet that contains the power supply and control for the robot arm. The robot arm is equipped with a welding torch and a cutting torch, for which the power supply is located in the shipping container. The shipping container is equipped with recesses at the top and bottom, in which the forks of a forklift can be inserted to lift the shipping container.

The shipping container thus forms a sturdy support frame for the robot arm and at the same time a bottomless canopy for the working area of the staple. Preferably, the underside of the support frame is suitable for placing the robot arm stably on the bridge deck, so that during operation of the robot, freight traffic passing on the adjacent roadway of the bridge deck cannot bring the robot arm in an inconvenient motion. The steel shipping container, which rests with its flat steel underside on the bridge deck, provides such a stable support frame.

The robot arm has a weight of at least 100 or 150 or 175 or 200 kilograms.

## Claims

1. Method for the repair of an orthotropic steel highway bridge deck, comprising the steps of:
- cutting open an inspection hole in an area of the bridge deck, well within weld beads of a stiffening through, and measuring a location of the stiffening through;
- welding a temporary staple to the top of the bridge deck for retaining the shape of the area;
- cutting three slabs next to each other from the bridge deck in such a manner that between two adjacent slabs a strip of the bridge deck remains that is still attached to the rest of the bridge deck and to which strip the stiffening trough under the bridge deck is attached;
- removal of the cut slabs;
- cutting of the strips from the stiffening through;
- removal of the cut strips such that a hole is made in the bridge deck; and
- placing a repair plate in the hole made in the bridge deck and welding the repair plate to the surrounding bridge deck and the stiffening trough to the repair plate,
wherein the repair plate is welded to the surrounding bridge deck by an industrial robot.

2. The method according to claim 1, wherein, in the step of cutting and removing three slabs next to each other, the middle slab is wider than the two adjacent slabs, preferably at least twice the width.

3. The method according to claim any one of claims 1 - 3, wherein the step of placing a repair plate comprises placing a repair plate which is thicker than the original bridge deck and wherein the cutting of the strips is performed so that the upper edge of the stiffening trough comes below its original level, so that the thicker repair plate with its top surface is flush with the top surface of the rest of the bridge deck.

4. The method according to any one of the preceding claims, wherein the welding of the stiffening through to the repair plate is performed from below the bridge deck by a welder.

5. The method according to any one of the preceding claims, wherein the industrial robot is located above the deck.

6. The method according to any one of the preceding claims, wherein cutting of a slab or strip is carried out by an industrial robot.

7. The method according to any one of the preceding claims, carried out with a robot arm with a minimum of 3-, 5-, or 6- or 7-axis which is fixedly mounted to a structure standing free and stable on top of the bridge deck.

8. The method according to claim 7, wherein the robot arm is suspended above the top surface of the bridge deck and / or is mounted inside a shipping container or on the rear of a truck or forklift.

9. The method according to any one of claims 1-8, wherein the robot arm is vertically or horizontally mounted overhead.

## Patentansprüche

1. Verfahren zur Reparatur eines orthotropen Autobahnbrückendecks aus Stahl, das die folgenden Schritte umfasst:
- Aufschneiden eines Inspektionslochs in einem Bereich des Brückendecks, gut innerhalb der Schweißnähte einer Durchsteifung, und Messen einer Stelle der Durchsteifung;
- Anschweißen einer provisorischen Klammer an die Oberseite des Brückendecks, um die Form des Bereichs beizubehalten;
- Schneiden von drei nebeneinander liegenden Platten aus dem Brückendeck, so dass zwischen zwei benachbarten Platten ein Streifen des Brückendecks verbleibt, der noch an dem Rest des Brückendecks befestigt ist und an dem die Versteifungsrinne unter dem Brückendeck befestigt ist.
- Entfernen der geschnittenen Platten;
- Schneiden der Streifen von der Durchsteifung;
- Entfernen der geschnittenen Streifen, so dass ein Loch in dem Brückendeck hergestellt wird; und
- Einsetzen einer Reparaturplatte in das in dem Brückendeck hergestellte Loch und Anschweißen der Reparaturplatte an das umgebende Brückendeck und der Versteifungsrinne an die Reparaturplatte,
wobei die Reparaturplatte von einem Industrieroboter an das umgebende Brückendeck geschweißt wird.

2. Verfahren nach Anspruch 1, wobei beim Schritt des Schneidens und Entfernens von drei nebeneinander liegenden Platten die mittlere Platte breiter als die zwei benachbarten Platten ist, vorzugsweise mindestens doppelt so breit.

3. Verfahren nach einem der Ansprüche 1 - 3, wobei der Schritt des Einsetzens einer Reparaturplatte das Einsetzen einer Reparaturplatte umfasst, die dicker als das ursprüngliche Brückendeck ist, und wobei das Schneiden der Streifen so ausgeführt wird, dass die Oberkante der Versteifungsrinne unter ihr ursprüngliches Niveau kommt, so dass die dickere Reparaturplatte mit ihrer Oberseite mit der Oberseite des restlichen Brückendecks bündig ist.

4. Verfahren nach einem der vorhergehenden Ansprüche, wobei das Anschweißen der Durchsteifung an die Reparaturplatte von unterhalb des Brückendecks von einem Schweißer ausgeführt wird.

5. Verfahren nach einem der vorhergehenden Ansprüche, wobei sich der Industrieroboter oberhalb des Decks befindet.

6. Verfahren nach einem der vorhergehenden Ansprüche, wobei das Schneiden einer Platte oder eines Streifens von einem Industrieroboter ausgeführt wird.

7. Verfahren nach einem der vorhergehenden Ansprüche, das mit einem Roboterarm mit einem Minimum von 3, 5 oder 6 oder 7 Achsen ausgeführt wird, der fest an einer Struktur montiert ist, die frei und stabil auf dem Brückendeck steht.

8. Verfahren nach Anspruch 7, wobei der Roboterarm über der Oberseite des Brückendecks aufgehängt ist und / oder in einem Transportcontainer oder an dem Heck eines Lastwagens oder Gabelstaplers montiert ist.

9. Verfahren nach einem der Ansprüche 1-8, wobei der Roboterarm vertikal oder horizontal über Kopf montiert ist.

## Revendications

1. Procédé de réparation d'un tablier de pont routier en acier orthotrope, comprenant les étapes de :
- découper un trou d'inspection dans une zone du tablier de pont, bien à l'intérieur des cordons de soudure d'une gouttière de raidissement, et mesurer un emplacement de la gouttière de raidissement ;
- souder une agrafe temporaire au sommet du tablier de pont pour conserver la forme de la zone ;
- couper trois dalles côte à côte du tablier du pont de telle manière qu'entre deux dalles adjacentes il reste une bande du tablier du pont qui est encore attachée au reste du tablier du pont et à laquelle est fixée la gouttière de raidissement sous le tablier du pont ;
- enlever les dalles coupées ;
- découper les bandes depuis le raidissement jusqu'au bout ;
- enlever les bandes coupées de manière à percer un trou dans le tablier de pont ; et
- placer une plaque de réparation dans le trou pratiqué dans le tablier de pont et souder la plaque de réparation au tablier de pont environnant et la gouttière de raidissement à la plaque de réparation,
où la plaque de réparation est soudée au tablier de pont environnant par un robot industriel.

2. Procédé selon la revendication 1, où, dans l'étape de découpe et d'enlèvement de trois dalles côte à côte, la dalle médiane est plus large que les deux dalles adjacentes, de préférence au moins deux fois plus large.

3. Procédé selon l'une quelconque des revendications 1 à 3, où l'étape de mise en place d'une plaque de réparation comprend la mise en place d'une plaque de réparation qui est plus épaisse que le tablier de pont d'origine et où la découpe des bandes est effectuée de manière à ce que le bord supérieur de la gouttière de raidissement vienne en-dessous de son niveau d'origine, de sorte que la plaque de réparation plus épaisse avec sa surface supérieure affleure la surface supérieure du reste du tablier de pont.

4. Procédé selon l'une quelconque des revendications précédentes, où le soudage du raidisseur jusqu'à la plaque de réparation est réalisé depuis le dessous du tablier de pont par un soudeur.

5. Procédé selon l'une quelconque des revendications précédentes, où le robot industriel est situé au-dessus du pont.

6. Procédé selon l'une quelconque des revendications précédentes, où la découpe d'une dalle ou d'une bande est réalisée par un robot industriel.

7. Procédé selon l'une quelconque des revendications précédentes, réalisé avec un bras robotisé avec un minimum de 3, 5 ou 6 ou 7 axes qui est monté de manière fixe sur une structure libre et stable au-dessus du tablier de pont.

8. Procédé selon la revendication 7, où le bras robot est suspendu au-dessus de la surface supérieure du tablier de pont et/ou est monté à l'intérieur d'un conteneur d'expédition ou à l'arrière d'un camion ou d'un chariot élévateur.

9. Procédé selon l'une quelconque des revendications 1 à 8, où le bras de robot est monté verticalement ou horizontalement au-dessus de la tête.
